# EUROPÄISCHE PATENTSCHRIFT

(11) **EP 0 862 528 B1**
(45) Veröffentlichungstag und Bekanntmachung des Hinweises auf die Patenterteilung: **09.01.2002**
(21) Anmeldenummer: 97913136.4
(22) Anmeldetag: 11.10.1997
(51) Int. Cl.: B61F 5/14

(54) **SCHIENENFAHRZEUG**
RAIL VEHICLE
VEHICULE FERROVIAIRE

(30) Priorität: 16.10.1996 DE 19642678
(43) Veröffentlichungstag der Anmeldung: 09.09.1998
(73) Patentinhaber: DaimlerChrysler AG, 70567 Stuttgart (DE)
(72) Erfinder: BIEKER, Guido, D-67399 Kirchhunden (DE)
(74) Vertreter: Luderschmidt, Schüler & Partner GbR
(86) Internationale Anmeldenummer: EP9705630
(87) Internationale Veröffentlichungsnummer: WO9816415

(56) Entgegenhaltungen:
- DE-A- 1 605 051
- DE-A- 3 508 164

## Beschreibung

Die Erfindung betrifft ein Schienenfahrzeug mit einem luftgefederten Wagenkasten, mit den Wagenkasten abstützenden Drehgestellen, insbesondere mit wiegenlosen luftgefederten Drehgestellen, bei denen der Wagenkasten auf der Luftfeder aufliegt und ausdreht, und mit jeweils zwischen dem Wagenkasten und den Drehgestellen angeordneten Führungs- und Dämpfungseinrichtungen, welche Dämpfungseinrichtungen dazu dienen, die Drehgestelle bei Fahrgeschwindigkeiten v > 100 km/h zu stabilisieren und deren Schlingern zu unterdrücken.

Es ist allgemein bekannt, daß infolge des wellenartigen Bewegungsablaufs der in Drehgestellen geführten Radsätze mit zunehmender Geschwindigkeit das Drehgestell zum Schlingern angeregt wird. Zur Stabilisierung der Drehgestelle ist es hierzu ferner bekannt, ölhydraulische Schlingerdämpfer oder statt dessen Reibplatten vorzusehen, welche jeweils zwischen dem Drehgestell und dem zugehörigen Wagenkasten angeordnet sind.

Schlingerdämpfer kommen üblicherweise insbesondere bei luftgefederten, wiegenlosen Drehgestellen zur Anwendung, wobei der Wagenkasten auf der Luftfeder ausdreht. Die Verwendung von Schlingerdämpfern zur Stabilisierung von Drehgestellen ist vergleichsweise aufwendig, kostenintensiv und überdies auch gewichtstreibend, da stets eine Ausfallanalyse der Schlingerdämpfung gefordert wird, welche unter Umständen eine einfach redundante Ausführung erfordert, das heißt, daß die Dämpfer zweifach vorzusehen sind, und gegebenenfalls zusätzlich oder alternativ eine Laufüberwachung der Drehgestelle mittels entsprechender Sensorelemente.

Abhängig von der Art und Gestaltung der Drehgestelle ist eine Stabilisierung ab Fahrgeschwindigkeiten von 100 bist 120 km/h erforderlich. Mit zunehmender Geschwindigkeit muß hierbei die Stabilisierungswirkung zunehmen, was sich wiederum nachteilig auf die Spurführungskräfte bei Bogenfahrt auswirkt. Dies ist der Grund dafür, daß man bestrebt ist, die Stabilisierung nur soweit vorzusehen wie nötig.

Ausgehend von diesem Stand der Technik ist es Aufgabe der Erfindung, eine konstruktive Lösung zur Stabilisierung von Drehgestellen und Wagenkasten anzugeben, welche möglichst einfach und platzsparend sowie möglichst ausfallsicher gestaltet ist und ohne besonderen Aufwand nachrüstbar ist.

Diese Aufgabe wird erfindungsgemäß gelöst durch die kennzeichnenden Merkmale des Anspruchs 1. Weitere vorteilhafte Ausgestaltungen und Verbesserungen der Erfindung sind in den Unteransprüchen angegeben.

Gemäß der Erfindung ist als Führungs- und Dämpfungseinrichtung eine Reibplatte vorgesehen, welche über den Luftinnendruck der Luftfeder an die Unterseite des Wagenkastens gedrückt ist. Dabei ist die Reibplatte an dem Kern einer Notfeder oder am Fußpunkt der Luftfeder angelenkt und hierüber in Längsrichtung mit dem Drehgestell verbunden, um das Schlingern des Drehgestells zu unterdrücken.

Entsprechend einer vorteilhaften Ausführungsform der Erfindung bewegt sich beim Ausdrehen des Wagenkastens dessen Unterseite relativ zu der hieran anliegenden Luftfeder und unterdrückt infolge der hierbei geleisteten Reibarbeit auftretende Schlingerbewegungen des Drehgestells.

Eine weitere Ausgestaltung der Erfindung ist dadurch gekennzeichnet, daß die Reibplatte in Querrichtung über eine als Längsmitnahme bezeichnete Verbindungslasche gelenkig mit der Notfeder verbunden ist und bei Querbewegungen des Wagenkastens mitgeht. Hierdurch ist die Schwingungsentkopplung in Querrichtung und damit die Querlaufgüte nicht beeinflußt.

Eine vorteilhafte Weiterbildung der Erfindung weist zwischen der Unterseite des Wagenkastens und der Reibplatte eine Entlüftungsöffnung auf, welche sicherstellt, daß stets die volle Druckdifferenz und somit die volle Anpreßkraft zwischen der Reibplatte und dem Wagenkasten wirkt.

Vorteilhafterweise kann überdies vorgesehen sein, daß die Reibplatte von einer Dichteinrichtung umschlossen ist, wobei deren Undichtwerden, zum Beispiel infolge alterungsbedingter Porosität oder durch mechanischen Verschleiß beziehungsweise Beschädigung insoweit unkritisch ist, als sich dies als Ausfall der Luftfeder darstellt. Für diesen Fall ist in weiterer Verbesserung der Erfindung vorgesehen, daß der Wagenkasten unter Zwischenschaltung der Reibplatte auf der Notfeder aufliegt. Hierbei wirkt die gesamte Gewichtskraft auf die Reibplatte, damit aber steht in jedem Fall eine ausreichende Reibkraft für die Stabilisierung zur Verfügung.

Entsprechend einer weiteren bevorzugten Ausgestaltung der Erfindung kann eine Gegenfeder, zum Beispiel eine Schraubendruckfeder, vorgesehen sein. Diese Gegenfeder hat nicht die Aufgabe die Anpreßkraft zu erhöhen, sondern dient dazu, bei Entlastung der Luftfeder und/oder der Notfeder die Reibplatte gegen die Unterseite des Wagenkastens zu beaufschlagen und so für einen ununterbrochenen Kraftfluß zu sorgen.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels sollen die Erfindung, vorteilhafte Ausgestaltungen und Verbesserungen sowie besondere Vorteile der Erfindung näher erläutert und beschrieben werden.

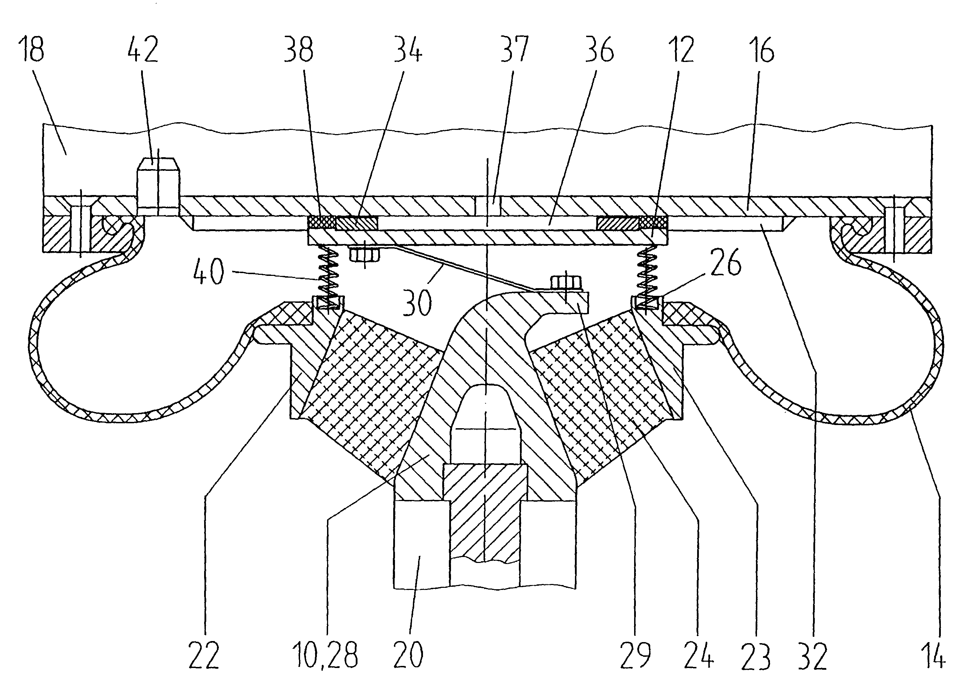

Es zeigt:
- die einzige Figur: einen Querschnitt durch eine erfindungsgemäße Dämpfungseinrichtung.

In der einzigen Figur ist eine Dämpfungseinrichtung 10 im Querschnitt dargestellt, welche von einer Reibplatte 12 gebildet ist, welche mit einer Luftfeder 14 zusammenarbeitet und die Unterseite 16 eines zugeordneten Wagenkastens 18 beaufschlagt. Bei der erfindungsgemäßen Gestaltung der Dämpfungseinrichtung 10 gemäß der einzigen Figur ist die von einem Ringbalg gebildete Luftfeder 14 einerseits mit einer am zugehörigen Drehgestell 20 angeordneten Führung 22 verbunden und andererseits mit der mit einer verschleißfesten Schicht versehenen Unterseite 16 des Wagenkastens 18. Hierbei ist die Führung 22 als Tragring 23 ausgebildet, der mittels einer vorzugsweise anvulkanisierten ringförmigen Gummifeder 24 an einem an dem nicht näher gezeigten Drehgestell 20 angeordneten Stützkegel 28 anschließt und gleichzeitig als Notfeder 26 dient.

An dem oberen Ende des Stützkegels 28 ist ein Führungszapfen 29 angeformt, an welchen eine Verbindungslasche 30 anschließt, die mit der Reibplatte 12 verbunden ist und als Längsmitnahme dient.

Zur eindeutigen Längsführung der Reibplatte 12 ist an der Unterseite 16 des Wagenkastens wenigstens eine Führungsleiste 32 angebracht, entlang welcher die Reibplatte im Ansprechfall auslenkt. Die Reibplatte selbst besitzt einen ringförmigen Reibbelag 34, der gegenüber der Unterseite 16 des Wagenkastens 18 einen Spaltraum 36 bildet., der über eine Entlüftungsöffnung 37 mit der Umgebungsatmosphäre in Verbindung steht und in welchem Umgebungsdruck vorherrscht.

Der von dem ringförmigen Reibbelag 34 umgebene Spaltraum 36 ist zu diesem Zweck mittels einer Ringdichtung 38 abgedichtet, welche die auftretenden Druckunterschiede zwischen dem Umgebungsdruck und dem Innendruck der Luftfeder 14 überträgt. Durch die hiermit sichergestellte Druckdifferenz ist gewährleistet, daß die Reibplatte 12 stets mit dem vollen Druck der Luftfeder gegen die Wagenkastenunterseite 16 beaufschlagt ist.

Ferner sind auf einem konzentrischen Teilkreis Stütz- oder Gegenfedern 40 zwischen dem Tragring 23 und der Reibplatte 12 angeordnet, welche bei Entlastung der Luftfeder 14 die Reibplatte 12 gegen die Unterseite 16 des Wagenkastens 18 beaufschlagen.

Mit 42 schließlich ist ein Druckluftanschluß für die Luftfeder 14 bezeichnet, über welchen die Luftfeder 14 beaufschlagbar und ihr jeweiliger Druck einstellbar ist.

## Patentansprüche

1. Schienenfahrzeug mit einem luftgefederten Wagenkasten (18), mit den Wagenkasten (18) abstützenden Drehgestellen (20), insbesondere mit wiegenlosen luftgefederten Drehgestellen, bei denen der Wagenkasten (18) auf einer Luftfeder (14) aufliegt und ausdreht, und mit jeweils zwischen dem Wagenkasten (18) und den Drehgestellen (20) angeordneten Führungs- und Dämpfungseinrichtungen (10, 12), welche Dämpfungseinrichtungen (10, 12) dazu dienen, die Drehgestelle (20) bei Fahrgeschwindigkeiten v > 100 km/h zu stabilisieren und deren Schlingern zu unterdrücken, **dadurch gekennzeichnet, daß** als Führungs- und Dämpfungseinrichtung (10) eine Reibplatte (12) vorgesehen ist, welche vom Luftinnendruck der Luftfeder (14) gegen die Unterseite (16) des Wagenkastens (18) beaufschlagt ist, daß die Reibplatte (12) an dem Kern einer Notfeder (26) oder am Fußpunkt der Luftfeder (14) angelenkt ist und hierüber in Fahrzeuglängsrichtung mit dem Drehgestell (20) verbunden ist und das Schlingern des Drehgestells (20) unterdrückt.

2. Schienenfahrzeug nach Anspruch 1, **dadurch gekennzeichnet, daß** sich beim Ausdrehen des Wagenkastens (18) dessen Unterseite (16) relativ zu der hieran anliegenden Luftfeder (14) bewegt und infolge der hierbei geleisteten Reibarbeit Schlingerbewegungen des Drehgestells (20) unterdrückt.

3. Schienenfahrzeug nach Anspruch 1 oder 2, **dadurch gekennzeichnet, daß** die Reibplatte (12) in Fahrzeugquerrichtung über eine als Längsmitnahme bezeichnete Verbindungslasche (30) gelenkig mit der Notfeder (26) verbunden ist.

4. Schienenfahrzeug nach einem der Ansprüche 1 bis 3, **dadurch gekennzeichnet, daß** zwischen der Unterseite (16) des Wagenkastens (18) und der Reibplatte (12) eine Entlüftungsöffnung (37) vorgesehen ist.

5. Schienenfahrzeug nach Anspruch 4, **dadurch gekennzeichnet, daß** die Entlüftungsöffnung (37) stets die volle Druckdifferenz zwischen dem Innendruck der Luftfeder und dem Umgebungsdruck und somit die volle Anpreßkraft zwischen der Reibplatte (12) und dem Wagenkasten (18) sicherstellt.

6. Schienenfahrzeug nach einem der vorherigen Ansprüche, **dadurch gekennzeichnet, daß** die Reibplatte (12) mit einer Dichteinrichtung (38) versehen ist, welche an der Unterseite (16) des Wagenkastens (18) anliegt und einen von der Dichtungseinrichtung (38) umschlossenen Spaltraum (36) abdichtet.

7. Schienenfahrzeug nach einem der vorherigen Ansprüche, **dadurch gekennzeichnet, daß** bei Ausfall der Luftfeder (14) und/oder der die Reibplatte (12) umschließenden Dichtungseinrichtung (38) der Wagenkasten (18) unter Zwischenschaltung der Reibplatte (12) auf der Notfeder (26) aufliegt.

8. Schienenfahrzeug nach einem der vorherigen Ansprüche, **dadurch gekennzeichnet, daß** eine Gegenfeder (40) vorgesehen ist, welche bei Entlastung der Luftfeder (14) und/oder der Notfeder (26) die Reibplatte (12) gegen die Unterseite (16) des Wagenkastens (18) beaufschlagt.

## Claims

1. A rail vehicle with an pneumatically sprung wagon body (18), with bogies (20) supporting the wagon body (18), particularly with pneumatically suspended bogies with no bogey bolster, in which the wagon body (18) rests on and swings out on an air spring (14) and with guiding and damping means (10, 12) disposed in each case between the wagon body (18) and the bogies (20), said damping means serving to stabilise the bogies (20) and to suppress their hunting at travelling speeds in excess of 100 kph, **characterised in that** the guiding and damping means provided is a friction plate (12) which is applied against the under side (16) of the wagon body (18) by the internal air pressure in the air spring (14) and **in that** the friction plate (12) is hinged on the core of an emergency spring (26) or on the root of the air spring (14) and is longitudinally connected to the bogey (20) and attenuates any hunting thereof.

2. A rail vehicle according to claim 1, **characterised in that** in the event of the wagon body (18) swinging out, its under side (16) moves in relation to the air spring (14) bearing on it and as a result of the friction work generated thereby, hunting movements on the part of the bogey (20) are suppressed.

3. A rail vehicle according to claim 1 or 2, **characterised in that** the friction plate (12) is articulatingly connected to the emergency spring (26) in the transverse direction of a vehicle by a connecting member (30) described as the longitudinal drive.

4. A rail vehicle according to one of claims 1 to 3, **characterised in that** a vent orifice (37) is provided between the under side (16) of the wagon body (18) and the friction plate (12).

5. A rail vehicle according to claim 4, **characterised in that** the vent orifice (37) always ensures a complete pressure difference between the internal pressure of the air spring and the ambient pressure and consequently ensures the application of full pressure between the friction plate (12) and the wagon body (18).

6. A rail vehicle according to one of the preceding claims, **characterised in that** the friction plat (12) is provided with a sealing means (38) which bears on the under side (16) of the wagon body (18) and seals a gap (36) which is enclosed by the sealing means (38).

7. A rail vehicle according to one of the preceding claims, **characterised in that** upon failure of the air spring (14) and/or of the sealing means (38) surrounding the friction plate (12), the wagon body (18) rests on the emergency spring (26) through the interposed friction plate (12).

8. A rail vehicle according to one of the preceding claims, **characterised in that** a mating spring (40) is provided which applies the friction plate (12) against the under side (16) of the wagon body (18) when the load on the air spring (14) and/or emergency spring (26) is relieved.

## Revendications

1. Véhicule sur rails comprenant une caisse de wagon à suspension pneumatique (18), des bogies supportant la caisse de wagon (18), en particulier des bogies à suspension pneumatique exempts de traverses danseuses, la caisse de wagon (18) s'appuyant sur une suspension pneumatique (14) et négociant les virages en s'appuyant sur ladite suspension, ainsi que des dispositifs de guidage et d'amortissement (10, 12) disposés respectivement entre la caisse de wagon (18) et les bogies (20), lesdits dispositifs ayant pour objet de stabiliser les bogies (20) et d'atténuer le roulis auquel ils sont soumis à des vitesses v > 100 km/h, **caractérisé en ce qu'**on prévoit, à titre de dispositif de guidage et d'amortissement (10), une plaque de friction (12) qui est appliquée via la pression d'air interne de la suspension pneumatique (14) contre le côté inférieur (16) de la caisse de wagon (18), **en ce que** la plaque de friction (12) est articulée à la partie centrale d'un ressort de secours (26) ou à la base de la suspension pneumatique (14) et est de cette manière reliée dans le sens longitudinal du véhicule au bogie (20) et atténue le roulis du bogie (20).

2. Véhicule sur rails selon la revendication 1, **caractérisé en ce que**, lorsque la caisse de wagon (18) négocie un virage, son côté inférieur (16) se déplace par rapport à la suspension pneumatique (16) s'appuyant contre ce dernier et suite au travail de friction ainsi obtenu, atténue les mouvements de roulis du bogie (20).

3. Véhicule sur rails selon la revendication 1 ou 2, **caractérisé en ce que** la plaque de friction (12) est reliée, dans la direction transversale du véhicule, via une éclisse de raccordement (30) désignée par l'expression "entraînement longitudinal", en articulation au ressort de secours (26).

4. Véhicule sur rails selon l'une quelconque des revendications 1 à 3, **caractérisé en ce que**, entre le côté inférieur (16) de la caisse de wagon (18) et la plaque de friction (12), on prévoit une ouverture d'aération (37).

5. Véhicule sur rails selon la revendication 4, **caractérisé en ce que** l'ouverture d'aération (37) garantit toujours la différence de pression complète entre la pression interne de la suspension pneumatique et la pression environnante, et par conséquent la force de pression complète entre la plaque de friction (12) et la caisse de wagon (18).

6. Véhicule sur rails selon l'une quelconque des revendications précédentes, **caractérisé en ce que** la plaque de friction (12) est munie d'un dispositif d'étanchéité (38) qui vient s'appliquer contre le côté inférieur (16) de la caisse de wagon (18) et qui rend étanche un interstice (36) entouré par le dispositif d'étanchéisation (38).

7. Véhicule sur rails selon l'une quelconque des revendications précédentes, **caractérisé en ce que**, dans le cas d'une défaillance de la suspension pneumatique (14) et/ou du dispositif d'étanchéisation (38) entourant la plaque de friction (12), la caisse de wagon (18) vient s'appuyer contre le ressort de secours (26) par l'intermédiaire de la plaque de friction (12).

8. Véhicule sur rails selon l'une quelconque des revendications précédentes, **caractérisé en ce qu'**on prévoit un ressort antagoniste (40) qui, lors de la détente de la suspension pneumatique (14) et/ou du ressort de secours (26), applique la plaque de friction (12) contre le côté inférieur (16) de la caisse de wagon (18).
